# EUROPÄISCHE PATENTSCHRIFT

(11) **EP 0 995 574 B1**
(45) Veröffentlichungstag und Bekanntmachung des Hinweises auf die Patenterteilung: **14.05.2003**
(21) Anmeldenummer: 99119332.7
(22) Anmeldetag: 29.09.1999
(51) Int. Cl.: B29C 45/27, B29C 45/20

(54) **Düsen für Spritzgiessanlagen**
Nozzles for injection moulding apparatus
Buses pour dispositifs d'injection

(30) Priorität: 20.10.1998 DE 19848188
(43) Veröffentlichungstag der Anmeldung: 26.04.2000
(73) Patentinhaber: INCOE INTERNATIONAL, INC., D-63322 Rödermark (DE)
(72) Erfinder: Gauler, Kurt, 64390 Erzhausen (DE)
(74) Vertreter: Boecker, Joachim, Dr.-Ing.

(56) Entgegenhaltungen:
- EP-A- 0 323 330
- DE-A- 2 113 482
- FR-A- 2 282 990
- FR-A- 2 333 633
- US-A- 3 553 788
- US-A- 4 945 630
- US-A- 5 268 184
- PATENT ABSTRACTS OF JAPAN vol. 13, no. 22 (M-786), 19. Januar 1989 (1989-01-19) & JP 63 231917 A (HITACHI LTD), 28. September 1988 (1988-09-28)

## Beschreibung

Die vorliegende Erfindung bezieht sich auf Werkzeugdüsen und Maschinendüsen für Spritzgießanlagen. Beide Arten von Düsen bestehen im wesentlichen aus einem Düsenkopf und einem Düsenschaft.

Bei einer Werkzeugdüse ragt der Schaft in das Spritzgießwerkzeug hinein, welches die Form für das zu gießende Werkstück bildet. Der Kopf der Werkzeugdüse ist entweder direkt an die Maschinendüse der Spritzgießmaschine angeschlossen oder an einen Verteilerblock, über den die von der Spritzgießmaschine kommende Schmelze auf zwei oder mehr Werkzeugdüsen verteilt wird.

Eine Maschinendüse wird mit ihrem Düsenkopf an der Ausgangsöffnung der Spritzgießmaschine befestigt (eingeschraubt). Sie dient zur Anpassung der Ausgangsöffnung der Maschine an das die Schmelze aufnehmende Teil. Der Schaft der Maschinendüse ist also in der Regel entweder unmittelbar an eine Werkzeugdüse oder an die Angußbuchse eines Verteilerblocks angeschlossen.

Beide Arten von Düsen, Werkzeugdüse und Maschinendüse, wurden bisher aus einem Stück hergestellt. Lediglich die Anschnittkappe am ausgangsseitigen Ende des Schaftes ist häufig auswechselbar ausgebildet. Das einheitliche Bauteil aus Düsenkopf und Düsenschaft wird im Stand der Technik aus einem Rohling durch spanabhebende Bearbeitung hergestellt. Dabei ist der Enddurchmesser des Düsenschaftes bedeutend kleiner als der des Düsenkopfes.

Die bekannten einteiligen Düsen haben folgende Nachteile:
- Der Düsenkopf ist ein mechanisch hoch belastetes dem Verschleiß unterworfenes Teil. Ist er verschlissen, muß die komplette Düse ausgetauscht werden.
- Kopf und Schaft sind unterschiedlichen Belastungen ausgesetzt. Für den Kopf ist wegen der auf ihn wirkenden hohen Kräfte ein sehr hartes Material erwünscht, während für den weniger belasteten Schaft ein zähes Material erwünscht ist. Bei der Materialwahl muß daher ein Kompromiß gemacht werden.
- Wegen des erheblichen Unterschiedes der Durchmesser von Düsenkopf und Düsenschaft ist ein großer Zerspanungsaufwand bei der Herstellung erforderlich.
- Da die benötigten Abmessungen und Ausgestaltungen für den Düsenkopf und auch für den Düsenschaft sehr vielfältig sind, ist beim Hersteller und Anwender eine sehr umfangreiche Lagerhaltung unterschiedlich ausgebildeter und bemessener Düsen erforderlich.

Alle vorausgegangenen Punkte haben eine kostenerhöhende Wirkung. Außerdem sind im Falle der Notwendigkeit der Fertigung einer Ersatzdüse wegen des höheren Bearbeitungsaufwandes längere Lieferzeiten erforderlich.

Aus der DE-A-2 113 482 und der US-A-4 945 630 sind Düsen fin Spritzgießanlagen bekannt, die aus mehr als zwei Komponenten, darunter ein Düsenchaft, bestehen, wobei der Schaft in nicht zerstörungsfrei lösbarer Weise mit den anderen Komponenten verbunden ist.

Der vorliegenden Erfindung liegt die Aufgabe zugrunde, die vorgenannten Nachteile bekannter Düsen nachhaltig zu verkleinern und zum Teil sogar zu beseitigen.

Zur Lösung dieser Aufgabe werden Werkzeugdüsen und Maschinendüsen für Spritzgießanlagen gemäß Anspruch 1 vorgeschlagen.

Weitere Ausgestaltungen dieser Düsen beziehungsweise der Adapterköpfe sind gekennzeichnet durch die Merkmale der abhängigen Ansprüche.

Wesentliches Merkmale der Erfindung ist die zweiteilige, zerstörungsfrei lösbare Ausbildung der Düsen. Die Düsen bestehen aus einem selbständigen Adapterkopf und einem selbständigen Düsenschaft. Beide Teile sind durch Verschraubung miteinander zu einer Düse verbindbar.

Diese zweiteilige Ausbildung der Düse gestattet eine individuelle Herstellung von Düsenkopf und Düsenschaft. Für beide Teile kann das jeweils geeignetste Material bzw. dessen geeignetste Härte verwendet werden. Der Düsenschaft kann aus einem von vornherein durchschnittsschwächeren Rohling gefertigt werden, so daß der Zerspanungsaufwand verringert wird. Der Düsenkopf, also der Adapterkopf, kann in einer Vielzahl von Ausführungen gefertigt werden, die an die verschiedenen Anschlußbedingungen des eintrittsseitigen Endes der Düse angepaßt sind. In alle diese unterschiedlich ausgebildeten Adapterköpfe können beliebig ausgebildete Düsenschäfte eingeschraubt werden.

Anhand der in den Figuren gezeigten Ausführungsbeispiele soll die Erfindung näher erläutert werden. Es zeigen
- Figur 1: ein Beispiel für den Aufbau einer herkömmlichen Werkzeugdüse,
- Figur 2: ein erstes Ausführungsbeispiel einer Werkzeugdüse gemäß der Erfindung zum Anschluß an eine Maschinendüse,
- Figur 3: die Ausbildung des Adapterkopfes für den Anschluß einer Werkzeugdüse an eine Spritzgießmaschine, deren Austrittsöffnung als Dekompressionskolben ausgebildet ist,
- Figur 4: eine Werkzeugdüse gemäß der Erfindung, bei der der Adapterkopf zum Anschluß an einen Verteilerblock ausgebildet ist,
- Figur 5: eine Werkzeugdüse gemäß der Erfindung, bei der der Adapterkopf für einen schrägen Anschluß an eine Maschinendüse ausgebildet ist,
- Figur 6: ein Ausführungsbeispiel einer Maschinendüse gemäß der Erfindung.

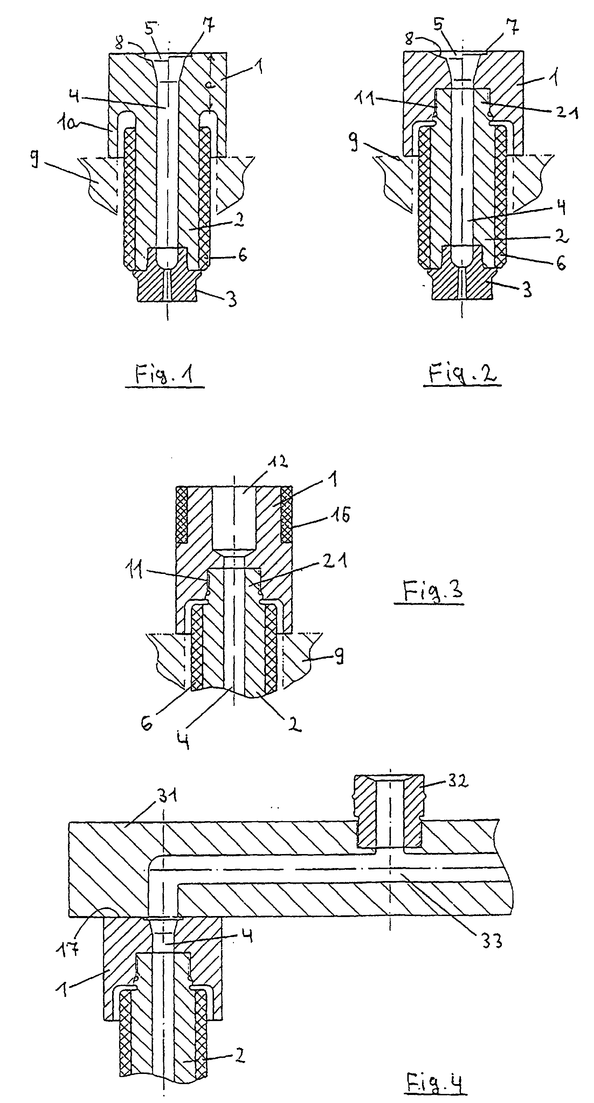

Figur 1 zeigt den wesentlichen Aufbau einer herkömmlichen Werkzeugdüse, bestehend aus dem Düsenkopf 1 und dem Düsenschaft 2. Der Düsenschaft 2 ist an seinem austrittsseitigen Ende mit einer auswechselbaren Anschnittkappe 3 versehen, die in die Kavität des Gießwerkzeuges mündet. Der Düsenschaft 2 ist von einer Heizmanschette 6 umgeben. Mit 4 ist der Schmelze- oder Fließkanal bezeichnet. Mit der Aufnahmevertiefung 5 wird die Werkzeugdüse an die nicht dargestellte Austrittsdüse der Spritzgießmaschine angesetzt, die den Düsenkopf 1 mit großer Kraft gegen das obere Teil des Spritzgießwerkzeuges 9 preßt. Die Dichtung der Maschinendüse erfolgt entweder über einen O-Ring 7, wie im rechten Teil der Figur 1 angedeutet, oder über eine konische oder kalottenförmige Andruckfläche 8, wie im linken Teil der Figur 1 angedeutet. Der Düsenschaft ist mit einer Heizmanschette zum Warmhalten der Schmelze versehen.

Man erkennt, daß im Bereich a der Düsenkopf hohen mechanischen Spannungen ausgesetzt ist. Der ringförmige Steg 1a des Düsenkopfs muß relativ lang sein, damit kein zu großer Wärmeabfluß an das angrenzende Spritzgießwerkzeug 9 stattfindet. Der Düsenschaft ist weniger stark belastet, und er soll mit Rücksicht auf mögliche Seitenkräfte möglichst aus einem zähen Material bestehen. Die eingangs genannten Nachteile einer herkömmlichen einteiligen Düse werden durch Figur 1 somit offenbar.

Figur 2 zeigt eine Werkzeugdüse entsprechend Figur 1 in einer Ausführung gemäß der Erfindung.'Die Düse besteht aus zwei selbständigen, miteinander verschraubbaren Teilen, dem Adapterkopf 1 und dem Düsenschaft 2. Der Adapterkopf hat an seiner Schmelzeaustrittsseite ein konzentrisch zum Schmelzekanal 4 angeordnetes Gewindesackloch 11, und der Düsenschaft 2 ist an seinem eintrittsseitigen Ende mit einem dem Gewindesackloch 11 angepaßten, den Schmelzekanal umgebenden Gewindezapfen 21 umgeben. Über diese Gewindeverbindung werden Kopf und Schaft zu einer einheitlichen Düse zusammengeschraubt. Dieser zweiteilige Aufbau erlaubt es, den gleichen Düsenschaft mit frei wählbaren unterschiedlich ausgebildeten Düsenköpfen (Adapterköpfen) zu verbinden, die an die Situation an der Schmelzeeintrittsseite der Düse angepaßt sind.

So zeigt Figur 3 schematisch die Ausbildung des Adapterkopfes für den Anschluß der Düse an eine Spritzgießmaschine, deren Austrittsöffnung als Dekompressionskolben ausgebildet ist. Unter dem Dekompressionsverfahren beim Spritzgießen wird folgendes verstanden: Bestimmte zu vergießende Kunststoffe haben einen sehr engen Temperaturbereich für ihren flüssigen Aggregatzustand. Hierzu gehören beispielsweise Polyamide, die in einem engen Temperaturintervall von beispielsweise 260 plus/minus 10 Grad C verspritzt werden müssen. Innerhalb dieses engen Temperaturbereiches haben diese Kunststoffe eine sehr niedrige Viskosität, die mit der von Wasser vergleichbar ist. Es besteht daher die Gefahr, daß beim Auswerfen eines gerade gespritzten Werkstückes die unter hohem Betriebsdruck stehende Schmelze aus der Düse austritt. Dies wird dadurch verhindert, daß die Maschinendüse als Kolben ausgebildet ist, der in einen Aufnahmezylinder des Düsenkopfes dichtend eingeführt ist. Kurz vor dem Auswerfen des Werkstückes wird der Düsenkolben der Spritzgießmaschine eine kurze Strecke zurückgefahren, so daß ein Unterdruck entsteht, der ein Austreten von Schmelze am Ausgang der Düse verhindert.

Entsprechend ist der in Figur 3 dargestellt Adapterkopf 1 mit einem Aufnahmezylinder 12 für den Maschinendüsenkolben ausgebildet. Im Ausführungsbeispiel der Figur 3 ist der Adapterkopf auch von einer Heizmanschette 16 umgeben. Eine solche Heizmanschette für den Adapterkopf kann im Bedarfsfalle auch bei den anderen Ausführungsformen der Erfindung, zum Beispiel der Werkzeugdüse gemäß Figur 2, vorgesehen sein.

Figur 4 zeigt schematisch eine Werkzeugdüse gemäß der Erfindung, bei der der Adapterkopf 1 zum Anschluß an einen Verteilerblock 31 ausgebildet ist. Die Maschinendüse spritzt die Schmelze in die Angußbuchse 32, von der sie über den Schmelzekanal 33 auf verschiedene Werkzeugdüsen, von denen nur eine 1,2 dargestellt ist, verteilt wird. Die Werkzeugdüse besteht aus dem Adapterkopf 1 und dem mit ihr wie in den vorherigen Ausführungsbeispielen verschraubten Düsenschaft 2. Der Düsenkopf ist bei dieser Ausführung an seiner Schmelzeintrittsseite mit einer zum Schmelzekanal 4 senkrechten ebenen Anlagefläche 17 für den Verteilerblock 31 ausgebildet, gegen den er in bekannter Weise durch Verschraubung fest anliegt.

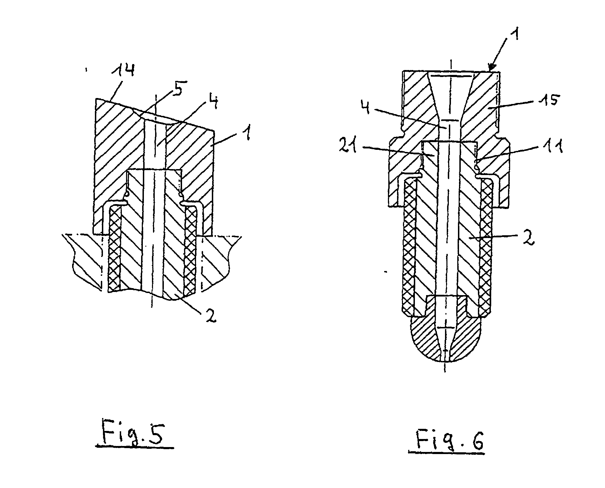

Figur 5 zeigt eine Werkzeugdüse gemäß der Erfindung, deren Adapterkopf 1 für einen schrägen Anschluß an eine Maschinendüse ausgebildet ist, die in der Aufnahmevertiefung 5 anliegt. Zu diesem Zweck ist die Anschlußebene 14 des Adapterkopfes schräg zur Längsrichtung des Fließkanals 4 ausgebildet. Durch diesen Schräganschluß kann bei gewissen Anwendungen, wenn der Eintritt in das Spritzgießwerkzeug mit der Längsrichtung der Maschinendüse nicht fluchtet, auf die Zwischenschaltung eines Verteilerblocks verzichtet werden.

Figur 6 zeigt schematisch die Ausbildung einer Maschinendüse gemäß der Erfindung. Wie eingangs erläutert, wird eine Maschinendüse an die Austrittsseite der Spritzgießmaschine angeschlossen, um das Austrittsende der Maschine an das die Schmelze aufnehmende Bauteil, beispielsweise hinsichtlich des Durchmessers, anzupassen. Auch diese Maschinendüsen wurden bisher einteilig hergestellt. Durch die zweiteilige Ausbildung gemäß der Erfindung werden hier ebenfalls im wesentlichen die gleichen Vorteile erzielt wie bei einer Werkzeugdüse gemäß der Erfindung. Wie Figur 6 zeigt, ist der Adapterkopf 1 mit einem Gewindezapfen 15 ausgebildet, der in ein entsprechendes (nicht dargestelltes) Gewindeaufnahmeloch der Maschinendüse eingeschraubt werden kann. Der Schaft 2 der Maschinendüse gemäß der Erfindung ist an seinem austrittsseitigen, nicht dargestellten Ende wie eine herkömmliche Maschinendüse ausgebildet, die entweder direkt an eine Werkzeugdüse oder an einen Verteilerblock angeschlossen wird.

In den obigen Ausführungsbeispielen der Erfindung ist stets der Adapterkopf mit dem Gewindesackloch und der Schaft mit dem Gewindezapfen versehen. Natürlich kann dies bei einer Düse gemäß der Erfindung auch umgekehrt sein, das heißt, der Adapterkopf kann mit dem Gewindezapfen und der Schaft mit dem dazu passenden Gewindesackloch versehen sein.

Für die Vorratshaltung der Düsen ist es auch möglich, den Adapterkopf als sogenannten Adapterrohling auf Lager zu halten. Der Adapterrohling besteht dann aus einem zylindrischen Block, der bereits mit einem Schmelzekanal und dem Gewindesackloch bzw. dem Gewindezapfen für den Anschluß des Düsenschafts versehen ist. Die Schmelzeeintrittsseite des Adapterkopfes und seine Länge können dann je nach Bedarf kurzfristig durch relativ wenig spanabhebende Bearbeitung hergestellt werden. Gegebenenfalls kann der Adapterrohling auch bereits mit einem Absatz zur Aufnahme einer Heizmanschette 16 für den Adapterkopf versehen sein.

## Patentansprüche

1. Werkzeugdüse oder Maschinendüse für Spritzgießanlage, welche Düse aus einem Schaft (2) zum Einspritzen der Schmelze in das Spritzgießwerkzeug beziehungsweise in ein die Schmelze zum Spritzgießwerkzeug weiterleitendes Bauteil, und einem als separates Teil hergestellten Adapterkopf (1) zum Anschluß an das die Schmelze in die Düse einspeisende Bauteil besteht, wobei der Schaft (2) und der Adapterkopf (1) über eine einzige Schraubverbindung miteinander verbindbar sind, die sich zerstörungsfrei lösen läßt.

2. Werkzeugdüse nach Anspruch 1, **dadurch gekennzeichnet, daß** der Adapterkopf (1) aus einem vorzugsweise zylindrischen Block mit einem vorzugsweise zentralen Schmelzekanal (4) besteht, der an seinem Austrittsende in ein Gewindesackloch (11) übergeht, und daß der Schaft (2) mit einem in das Gewindesackloch (11) einschraubbaren Gewindezapfen (21) versehen ist, durch den sich der Schmelzekanal (4) des Schaftes erstreckt.

3. Werkzeugdüse nach Anspruch 1 oder 2, **dadurch gekennzeichnet, daß** der für eine Werkzeugdüse bestimmte Adapterkopf (1) an seinem dem Schaft (2) abgewandten Ende zum Anschluß an die Austrittsdüse einer Spritzgießmaschine ausgebildet ist.

4. Werkzeugdüse nach Anspruch 3, **dadurch gekennzeichnet, daß** das zum Anschluß an die Maschinendüse bestimmte Ende des Adapters mit einer Aufnahmevertiefung (5) für die Maschinendüse versehen ist, die entweder eine Auflagefläche für einen Dichtring (7) oder eine Anlagedichtfläche (8) aufweist.

5. Werkzeugdüse nach Anspruch 3 oder 4, **dadurch gekennzeichnet, daß** das zum Anschluß an die Maschinendüse bestimmte Ende des Adapterkopfes (1) schräg zur Längsachse des Schmelzekanals (4) des Adapterkopfes verläuft.

6. Werkzeugdüse nach Anspruch 1 oder 2, **dadurch gekennzeichnet, daß** das zum Anschluß an die Spritzgießmaschine bestimmte Ende des Adapterkopfes zur Aufnahme einer als Dekompressionkolben ausgebildeten Austrittsöffnung der Spritzgießmaschine ausgebildet ist.

7. Werkzeugdüse nach Anspruch 1 oder 2, **dadurch gekennzeichnet, daß** der für eine Werkzeugdüse bestimmte Adapterkopf (1) an seinem dem Schaft (2) abgewandten Ende mit einer ebenen Stirnfläche (17) zur Anlage an eine Austrittsöffnung eines Verteilerblocks (31) ausgebildet ist.

8. Maschinendüse nach Anspruch 1, **dadurch gekennzeichnet, daß** der Adapterkopf (1) aus einem vorzugsweise zylindrischen Block mit einem zentralen Schmelzekanal (4) besteht, der an seinem eintrittsseitigen Ende mit einem den Schmelzekanal (4) umgebenden Gewindezapfen (15) zum Einschrauben an den Ausgang der Spritzgießmaschine versehen ist und an seinem Austrittsende in ein Gewindesackloch (11) übergeht, in welches der mit einem Gewindezapfen (21) versehene Schaft (2) einschraubbar ist.

9. Düse nach einem der Ansprüche 2 bis 8, **dadurch gekennzeichnet, daß** das genannte Gewindesackloch (11) am Schaft (2) vorhanden ist und der genannte Gewindezapfen (21) am Adapterkopf (1) vorhanden ist.

10. Düse nach einem der vorhergehenden Ansprüche, **dadurch gekennzeichnet, daß** der Adapterkopf (1) mit einem Aufnahmeabsatz für eine Heizmanschette (16) versehen ist.

## Claims

1. Mould nozzle or machine nozzle for an injection moulding installation which nozzle consists of a shaft (2) for injecting the melt into the injection mould and into a construction component which conducts the melt to the injection mould, respectively, on the one hand, and an adapter head (1) manufactured as a separate part which is adapted for connection to the construction part which feeds the melt into the nozzle, on the other hand, wherein said shaft (2) and said adapter head (1) are connected to each other by a single screw connection adapted to be loosened in a non-destructive manner.

2. Mould nozzle according to claim, **characterized in that** the adapter head (1) consists of a preferably cylindrical block with a preferably central melt channel (4) which at its outlet end changes into a threaded pocket hole (11), and that the shaft (2) is provided with a threaded pin (21) adapted to be screwed into said threaded pocket hole (11) and through which threaded pin said melt channel (4) of the shaft extends.

3. Mould nozzle according to claim 1 or 2, **characterized in that** the adapter head (1) which is intended for a mould nozzle is adapted at its end facing away from the shaft (2) for connection to the outlet nozzle of a injection moulding machine.

4. Mould nozzle according to claim 3, **characterized in that** the end of the adaptor which is intended for connection to the machine nozzle is provided with a reception depression (5) for the machine nozzle which is provided either with an abutment surface for a sealing ring (7) or an abutment sealing area (8).

5. Mould nozzle according to claim 3 or 4, **characterized in that** the end of the adapter head (1) which is intended for connection to the machine nozzle extends obliquely to the longitudinal axis of the melt channel (4).

6. Mould nozzle according to claim 1 or 2, **characterized in that** the end of the adapter head intended for connection to the injection moulding machine is adapted for the reception of an outlet opening of the injection moulding machine formed as a decompression piston.

7. Mould nozzle according to claim 1 or 2, **characterized in that** the adapter head (1) intended for a mould nozzle is formed at its end facing away from the shaft (2) with a plane head area (17) for abutment against the outlet opening of a distributor block (31).

8. Machine nozzle according to claim 1, **characterized in that** the adapter head (1) consists of a preferably cylindrical block with a central melt channel (4) which cylindrical block is provided at its inlet end with a threaded pin (15) which surrounds the melt channel (4) and is intended to be screwed to the outlet end of the injection moulding machine and changes at its output end into a threaded bottom hole (11) into which the shaft (2) which is equipped with a threaded pin (21) is adapted to be screwed into.

9. Nozzle according to any of claims 2 to 8, **characterized in that** said threaded pocket hole (11) is arranged at the shaft (2) and said threaded pin (21) is arranged at the adapter head (1).

10. Nozzle according to any of the preceding claims, **characterized in that** the adapter head (1) is provided with a reception recess for accommodating a heating collar (16).

## Revendications

1. Buse de moule ou de machine pour installation de moulage par injection, cette buse étant constituée d'une tige (2) d'injection de la masse fondue dans le moule de moulage par injection ou dans un élément acheminant la masse fondue au moule de moulage par injection et d'une tête (1) d'adaptateur fabriquée en tant que pièce distincte de raccordement à l'élément alimentant la buse en masse fondue, la tige (2) et la tête (1) d'adaptateur pouvant être assemblées l'une à l'autre par un seul assemblage vissé, qui peut être désassemblée sans être détruit.

2. Buse de moule suivant la revendication 1, **caractérisée en ce que** la tête (1) de l'adaptateur est constituée d'un bloc, de préférence cylindrique, ayant un canal (4) pour la masse fondue, de préférence central, qui se transforme à son extrémité de sortie en un trou borgne (11) taraudé et **en ce que** la tige (2) est munie d'un tourillon (21) fileté qui peut se visser dans le trou borgne (11) taraudé et dans lequel s'étend le canal (4) pour la masse fondue de la tige.

3. Buse de moule suivant la revendication 1 ou 2, **caractérisée en ce que** la tête (1) de l'adaptateur déterminée pour une buse de moule est constituée, à son extrémité éloignée de la tige (2), en vue d'être raccordée à la buse de sortie, d'une machine de moulage par injection.

4. Buse de moule suivant la revendication 3, **caractérisée en ce que** l'extrémité de l'adaptateur, qui est destinée à se raccorder à la buse de la machine, est munie d'une cavité (5) de réception de la buse de la machine, qui a soit une surface d'appui pour un joint (7) d'étanchéité, soit une surface (8) d'étanchéité par contact.

5. Buse de moule suivant la revendication 3 ou 4, **caractérisée en ce que** l'extrémité de la tête (1) de l'adaptateur, qui est destinée à se raccorder à la buse de la machine, est inclinée par rapport à l'axe longitudinal du canal (4) pour la masse fondue de la tête de l'adaptateur.

6. Buse de moule suivant la revendication 1 ou 2, **caractérisée en ce que** l'extrémité de la tête de l'adaptateur, qui est destinée à se raccorder à la machine de moulage par injection, est constituée de manière à recevoir une ouverture de sortie de la machine de moulage par injection qui est constituée en piston de décompression.

7. Buse de moule suivant la revendication 1 ou 2, **caractérisée en ce que** la tête (1) de l'adaptateur destinée à une buse de moule est constituée à son extrémité éloignée de la tige (2) en ayant une surface (17) frontale plane destinée à venir en contact avec une ouverture de sortie d'un bloc (31) répartiteur.

8. Buse de moule suivant la revendication 1, **caractérisée en ce que** la tête de l'adaptateur est constituée d'un bloc, de préférence cylindrique, ayant un canal (4) central pour la masse fondue qui est muni à son extrémité du côté de l'entrée d'un tourillon (15) fileté entourant le canal (4) pour la masse fondue en vue de se visser sur la sortie de la machine de moulage par injection et à son extrémité de sortie se transforme en un trou borgne (11) taraudé, dans lequel peut être vissée la tige (2) munie d'un tourillon (21) fiteté.

9. Buse de moule suivant l'une des revendications 2 à 8, **caractérisée en ce que** le trou borgne (11) taraudé est présent sur la tige (2) et le tourillon (21) fileté est présent sur la tête (1) de l'adaptateur.

10. Buse de moule suivant l'une des revendications précédentes, **caractérisée en ce que** la tête (1) de l'adaptateur est munie d'un épaulement de réception d'une manchette (16) de chauffage.
